# DEMANDE DE BREVET EUROPEEN

(11) **EP 0 881 696 A1**
(43) Date de publication de la demande: **02.12.1998**
(21) Numéro de dépôt: 98401068.6
(22) Date de dépôt: 30.04.1998
(51) Int. Cl.: H01M 2/02

(54) **Générateur électrochimique étanche**

(30) Priorité: 02.05.1997 FR 9705450
(71) Demandeur: ALCATEL ALSTHOM COMPAGNIE GENERALE D'ELECTRICITE, 75008 Paris (FR)
(72) Inventeur: Verhoog, Roelof, 33750 Camarsac (FR); Atkin, John, 33200 Bordeaux (FR)
(74) Mandataire: Laroche, Danièle

(57) **Abrégé**

Générateur électrochimique comportant au moins un conteneur monobloc étanche en un matériau polymère, ledit conteneur comprenant de 1 à 50 alvéoles, chaque alvéole comprenant un faisceau électrochimique, ledit matériau comportant au moins 95% poids de polypropylène, le complément à 100% poids étant constitué de copolymère propylène - éthylène, ledit matériau étant caractérisé en ce que le degré de cristallinité (mesuré par diffraction X) dudit polypropylène est compris entre 55% et 65%.

## Description

La présente invention concerne un générateur électrochimique comportant au moins un conteneur monobloc de type étanche contenant de 1 à 50 alvéoles, chaque alvéole comprenant un faisceau électrochimique. Un tel générateur a généralement une capacité comprise entre 10 et 250 Ah et une énergie massique supérieure à 55 Wh/kg.

Les générateurs étanches à soupape de sécurité ne permettent pas d'échanges gazeux avec le milieu ambiant en fonctionnement normal. Par le passé, la plupart des générateurs étanches étaient principalement destinés à être incorporés dans des appareils portables. Ils étaient donc de petite taille et de capacité limitée (moins de 10Ah). Afin de protéger l'utilisateur contre une éventuelle surpression, leur forme est de préférence cylindrique et leur conteneur est habituellement métallique. Un tel conteneur est coûteux et pesant, pour des générateurs de capacité supérieure à 10 Ah, ce qui limite l'énergie massique du générateur.

Récemment le besoin de générateurs de grande capacité et de plus forte énergie massique s'est fait sentir. Les générateurs qui possèdent les meilleures caractéristiques sont de forme prismatique et possèdent un conteneur en matériau polymère. Le générateur de type "monobloc" présente un grand intérêt de ce point de vue. Il s'est posé alors le problème de son étanchéité notamment en présence d'une surpression interne modérée. Une condition principale de l'étanchéité du générateur est l'imperméabilité aux liquides et aux gaz, notamment à l'hydrogène, du matériau constituant son conteneur. En effet la perte d'une partie de l'électrolyte ou bien de l'eau ou du solvant organique constituant la base de l'électrolyte entraîne une baisse inévitable des performances du générateur. Par exemple, dans le cas d'un générateur à électrolyte alcalin, si le matériau employé pour réaliser le conteneur est perméable à la fois à l'oxygène et à l'hydrogène, cela revient à une perte d'eau, donc un raccourcissement de la durée de vie du générateur; ou bien si le matériau est perméable à l'un seulement de ces deux gaz, le profil de fonctionnement du générateur s'en trouve déséquilibré.

Notamment, pour des applications de type véhicule électrique, il avait été initialement envisagé, pour les générateurs étanches, un conteneur en polypropylène (PP) classique. Cette solution n'était pas satisfaisante notamment à cause de la mauvaise tenue mécanique de ce matériau. Une solution est d'ajouter des additifs électriquement non conducteurs audit matériau, destinés à améliorer ses propriétés mécaniques, tels qu'un additif choisi parmi les billes ou les fibres de verre et les charges minérales telles que la silice, l'argile ou le talc. Néanmoins de tels additifs ne sont généralement pas souhaités, notamment lorsque l'électolyte est un électrolyte alcalin tel que la potasse, car ils sont corrodés par ledit électolyte.

Ainsi le problème qui se pose est de trouver un matériau constituant le conteneur d'un générateur électrochimique étanche, qui puisse réaliser un bon compromis entre les propriétés mécaniques, notamment la rigidité, le choc, le fluage et la traction à froid, et éventuellement l'aptitude à la thermosoudure, ainsi que l'imperméabilité aux liquides et l'imperméabilité aux gaz, notamment à l'hydrogène. Le matériau selon l'invention résoud le problème posé, en ce qu'il correspond à une classe particulière de polypropylène qui, de façon surprenante, possède une imperméabilité aux gaz améliorée par rapport aux polypropylènes classiques, associée à un comportement mécanique nettement amélioré par rapport aux polypropylènes classiques.

La présente invention concerne un générateur électrochimique comportant au moins un conteneur monobloc étanche en un matériau polymère, ledit conteneur comprenant de 1 à 50, de préférence de 5 à 20, alvéoles, chaque alvéole comprenant un faisceau électrochimique, ledit matériau comportant au moins 95% poids, de préférence au moins 97% poids, de polypropylène, le complément à 100% poids étant constitué de copolymère propylène - éthylène, ledit matériau étant caractérisé en ce que le degré de cristallinité (mesuré par diffraction X) dudit polypropylène est compris entre 55% et 65%.

L'utilisation d'un matériau du conteneur du générateur selon l'invention à base de polypropylène de degré de cristallinité inférieur à 55%, par exemple égal à 52%, conduit à un matériau de comportemment mécanique insuffisant, trop "mou", possédant notamment une élongation en fluage, mesurée sous une charge de 5 MPa, à 55°C et pendant 10⁵ s, et sur des éprouvettes de dimensions données dans la norme ISO 527-2 sauf pour l'épaisseur qui est de 2,3 ± 0,2 mm, égale à 2,5%. L'utilisation d'un matériau du conteneur du générateur selon l'invention à base de polypropylène de degré de cristallinité supérieur à 65%, par exemple égal à 69%, conduit à un matériau de comportement mécanique insuffisant, trop "cassant", possédant notamment un choc à 20 ± 2 °C, mesurant la tenue au point d'injection sur un fond de bac de dimension 60 x 85 mm², égal à 1 Joule.

Le matériau constituant le conteneur d'un générateur selon l'invention présente l'avantage de posséder une imperméabilité aux gaz convenable tout en ayant une bonne imperméabilité aux liquides et un très bon comportement mécanique en l'absence de tout additif de renforcement mécanique.

La perméabilité aux gaz du matériau est jugée sur une mesure de la perméabilité à l'hydrogène. Elle est donnée en cm³/(cm².24h), pour un film d'épaisseur donnée dans des conditions données. Lors de l'utilisation d'un générateur électrochimique comportant au moins un conteneur monobloc étanche en un matériau polymère, pour l'application véhicule électrique, on considère qu'une valeur de la perméabilité du matériau inférieure ou égale à 4500 cm³/(cm².24h), mesurée à 25°C pour un film de 100 µm pour une pression relative de 1 bar à 75% de HR (ou taux d'Humidité Relative), est convenable.

La perméabilité aux liquides est jugée par un test de mesure de résistance électrique d'un conteneur du matériau rempli d'électrolyte et entouré de liquide type liquide de refroidissement. Un matériau ayant un comportement convenable donne une mesure de résistance infinie (c'est-à-dire supérieure à 20.000 MΩ) au départ et pendant une très longue durée, typiquement au bout de quelques centaines d'heures.

Le comportement mécanique est jugé sur une plage de -30°C à + 60 °C environ, notamment par la rigidité (mesurée en général par la flexion à +23°C), le choc à 20 ± 2 °C, le fluage (mesuré en général à 55°C) et les caractéristiques à froid (notamment la contrainte maximale en traction à -30°C), et éventuellement l'aptitude à la thermosoudure.

De préférence, le matériau selon l'invention possède les caractéristiques suivantes :
* un module de flexion à 23 °C supérieur à 1650 MPa (norme ISO 178)
* un choc à 20 ± 2 °C, mesurant la tenue au point d'injection sur un fond de bac de dimension 60 x 85 mm², supérieur à 5 J
* une contrainte maximale en traction à -30 °C, mesurée sur des éprouvettes de dimensions données dans la norme ISO 527-2 sauf pour l'épaisseur qui est de 2,3 ± 0,2 mm, à une vitesse de 1 mm/mn, supérieure à 35 MPa
* une élongation en fluage (en %), mesurée sous une charge de 5 MPa, à 55°C et pendant 10⁵ s, et sur des éprouvettes de dimensions données dans la norme ISO 527-2 sauf pour l'épaisseur qui est de 2,3 ± 0,2 mm, inférieure ou égale à 2%, et, éventuellement,
* un test de thermosoudure, mesuré à 23 °C avec une vitesse de traction de 10 mm/mn et sur des éprouvettes, thermosoudées ou non thermosoudées, constituées de 2 plaques carrées de 48 mm de côté et d'épaisseur 2,3 ± 0,2 mm, ladite thermosoudure étant étanche, tel que au moins 3/4 des pièces thermosoudées ont une tenue en traction au dessus de 90% par rapport à la tenue en traction des pièces non thermosoudées et 0% des pièces thermosoudées ont une tenue en traction au dessous de 75% par rapport à la tenue en traction des pièces non thermosoudées.

Le matériau du conteneur selon l'invention a l'avantage d'être un bon isolant électrique, d'avoir une bonne stabilité dimensionnelle en présence d'humidité, et de résister aux chocs et aux températures pouvant aller jusqu'à 100°C. En outre ledit matériau est léger (densité ≤ 0,92 g/cm³), facile à mettre en forme industriellement, en particulier par injection, et son coût est modéré.

Ledit matériau présente aussi l'avantage, lors de la présence d'un électrolyte alcalin, d'être chimiquement inerte vis-à-vis de l'électrolyte qui contient principalement au moins un hydroxyde alcalin, généralement à forte concentration, tel que la potasse KOH, la soude NaOH, ou la lithine LiOH. Ledit matériau est également résistant aux solvants organiques constituant la base des électrolytes non aqueux, ainsi qu'aux liquides de refroidissement circulant le long des parois extérieures du générateur électrochimique selon l'invention.

L'invention s'applique en particulier à tout générateur électrochimique comportant au moins un conteneur monobloc composé de plusieurs pièces thermosoudées entre elles. A titre d'exemple, le conteneur peut comprendre un bac et un couvercle indépendants, ou bien un bac servant de couvercle et un fond rapporté. De plus, ledit générateur électrochimique selon l'invention peut comporter un dispositif de refroidissement par circulation d'un liquide caloporteur le long des parois du conteneur. Ce dispositif peut être par exemple tel que décrit dans la demande de brevet européen EP-A-0.596.778. On peut également adjoindre à tout conteneur du générateur électrochimique selon l'invention un système de remplissage en électrolyte centralisé qui se place sur le couvercle. Le conteneur monobloc peut être associé à au moins un autre conteneur du même type pour former un générateur électrochimique de plus forte capacité que celui comprenant un seul conteneur si ladite association est une mise en parallèle.

Selon un premier mode de réalisation, le générateur électrochimique selon l'invention est à électrolyte alcalin et contient des faisceaux nickel-hydrure métallique.

Selon un deuxième mode de réalisation, le générateur électrochimique selon l'invention est à électrolyte alcalin et contient des faisceaux nickel-cadmium.

Selon un troisième mode de réalisation, le générateur électrochimique selon l'invention est à électrolyte liquide organique et contient des faisceaux au lithium.

Le générateur électrochimique selon l'invention est particulièrement adapté à l'utilisation comme source d'énergie d'un véhicule automobile. Le matériau du conteneur a l'avantage d'être chimiquement peu sensible voire insensible aux différents fluides présents, comme par exemple le liquide du circuit de freinage.

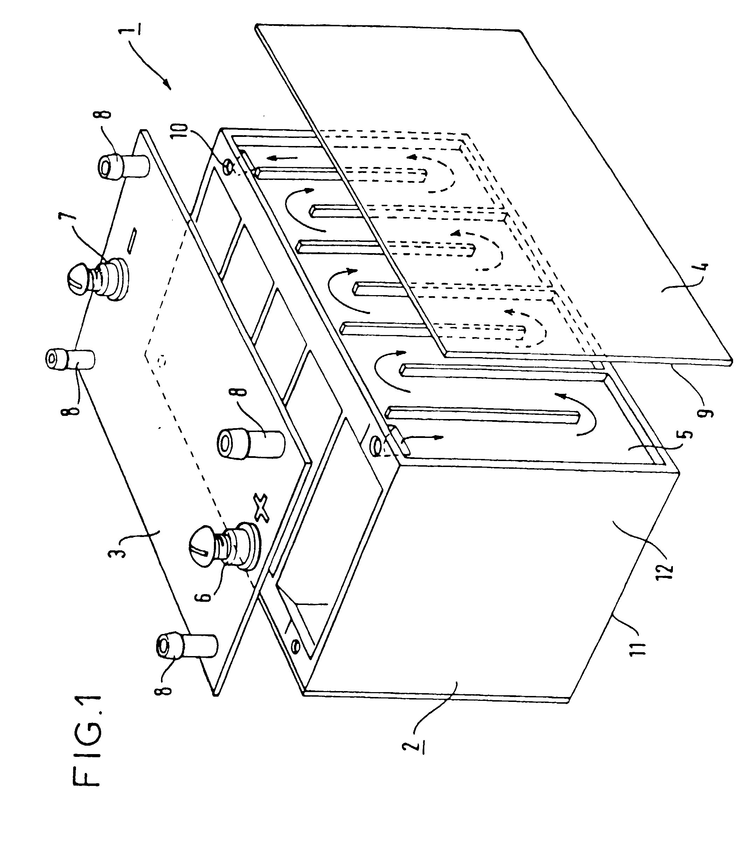

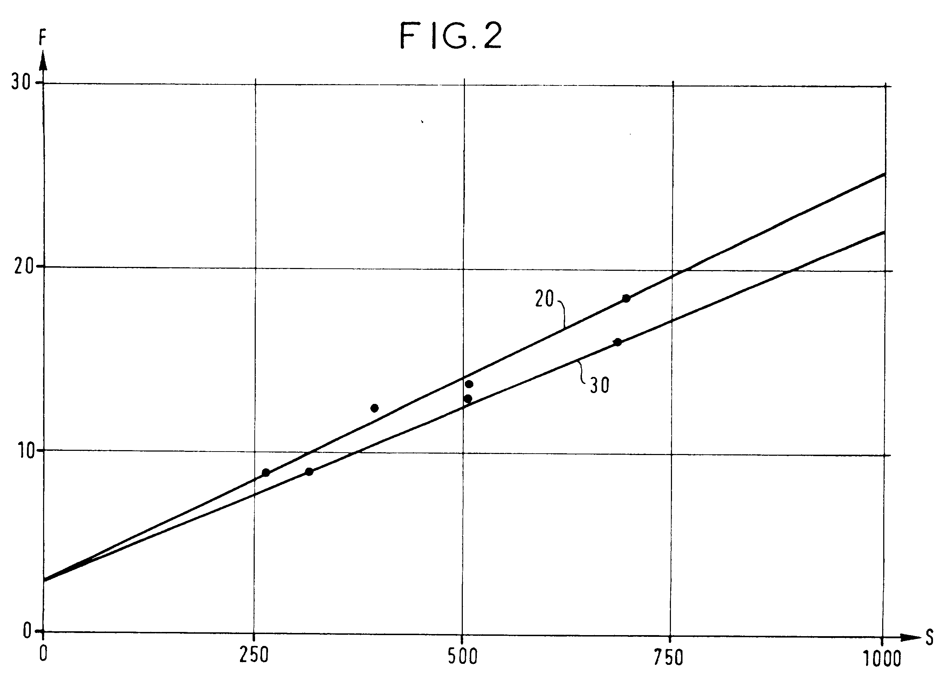

L'invention sera mieux comprise et d'autres avantages et particularités apparaîtront à la lecture de la description qui va suivre, donnée à titre non limitatif, par référence à la figure 1 annexée qui représente en perspective élcatée une batterie étanche monobloc selon la présente invention contenant cinq alvéoles et la figure 2 qui mesure la perméabilité à l'hydrogène pour chacun des matériaux testés dans les exemples qui suivent.

La figure 1 représente une batterie d'accumulateurs monobloc de capacité 120Ah et de tension 6V. Elle comporte un conteneur 1 composé d'un bac 2, d'un couvercle 3 et de deux flasques 4 rapportés sur les parois longitudinales 5 du bac 2. Le couvercle porte les bornes positive 6 et négative 7, ainsi que les tubulures 8, communiquant avec l'espace 9 situé entre la paroi longitudinale 5 du bac 2 et le flasque 4 par l'intermédiaire d'une boîte à eau 10. Cet espace 9 est destiné à recevoir un fluide caloporteur en circulation afin de refroidir ou de réchauffer la batterie selon les circonstances; ce système a été décrit dans la demande de brevet européen EP-A-0.596.778. Le bac comporte un fond 11 et des parois latérales 12.

Les pièces 2, 3 et 4 composant le conteneur 1 sont réalisées par injection sous pression du matériau à l'état fondu à une température comprise entre 240 et 290°C. Ces pièces sont ensuite assemblées par thermosoudure par contact direct. Elles sont amenées au contact de la surface de l'outil chauffant. L'outil est retiré et les zones fondues sont pressées l'une contre l'autre.

### Exemples

Les exemples qui suivent illustrent l'invention, sans pour autant en limiter la portée.

Deux matériaux différents ont été testés: un matériau comparatif de type polypropylène classique (matériau 1), représenté par exemple par la référence "PPR 1042" par la société HOECHST, dont le taux de cristallinité est de 40%, et un matériau selon l'invention (matériau 3), comportant au minimum 97% poids de polypropylène, le complément à 100% poids étant constitué de copolymère propylène - éthylène, dont le taux de cristallinité est de 59 %.

Les deux matériaux ont été testés en terme de propriétés mécaniques, dans l'exemple 1 ci-après, en terme de perméabilité aqueuse, dans l'exemple 2 ci-après, et en terme de perméabilité aux gaz, en l'occurence l'hydrogène, dans l'exemple 3 ci-après.

### EXEMPLE 1

Les propriétés mécaniques des matériaux 1 et 2 sont évaluées au cours de différents essais.

### a) Flexion à 23°C

Les valeurs de flexion sont données ci-après. Elles ont été mesurées avec la norme ISO 178.

| Matériau | Module (MPa) |
|---|---|
| 1 (comparatif) | 1200 |
| 2 (selon l'invention) | 1790 |

### b) Choc à 20 ± 2°C

Les conditions de l'essai sont les suivantes ; les bacs en matériau donné, de fond de dimension 60 x 85 mm², et de hauteur de 250 mm, sont soumis au choc d'un mobile de masse déterminée, ce mobile tombant en chute libre d'une hauteur déterminée, les pièces soumises à l'essai ayant séjourné au moins 48 h dans le local à 20 ± 2 °C avant l'essai. Le test permet la mesure de la tenue au point d'injection.

Les résultats sont donnés ci-après :

| Matériau | Choc (J) |
|---|---|
| 1 (comparatif) | > 28 |
| 2 (selon l'invention) | 8 |

### c) Traction à -30°C

Les conditions de l'essai sont les suivantes. Le matériel testé se présente sous la forme d'éprouvettes de dimensions données dans la norme ISO 527-2 sauf pour l'épaisseur qui est de 2,3 ± 0,2 mm. La température de l'essai est de -30°C. L'essai se fait en traction à une vitesse de 1 mm/mn.

| Matériau | Contrainte maximale (MPa) |
|---|---|
| 1 (comparatif) | 31 |
| 2 (selon l'invention) | 44 |

### d) Fluage à +55 °C

Le fluage est réalisé dans les conditions suivantes : la température de l'essai est de + 55 °C. L'essai se fait en traction sous une charge de 5 MPa et la durée du test est de 10⁵ s. Le matériel testé se présente sous la forme d'éprouvettes de dimensions données dans la norme ISO 527-2 sauf pour l'épaisseur qui est de 2,3 ± 0,2 mm.

Les résultats sont les suivants :

| Matériau | % d'élongation |
|---|---|
| 1 (comparatif) | 3,9 |
| 2 (selon l'invention) | 1,7 |

### e) Test de thermosoudure

Le test de thermosoudure permet l'évaluation des thermosoudures étanches par un test de traction. Les conditions de l'analyse sont : une température d'essai de 23 °C et une vitesse de traction de 10 mm/mn. Les éprouvettes sont découpées dans des bacs de format 60 mm x 85 mm x 250 mm. Les éprouvettes, thermosoudées ou non thermosoudées, sont constituées de 2 plaques carrées de 48 mm de côté et d'épaisseur 2,3 ± 0,2 mm. Elles sont thermosoudées à différentes températures (240 - 250 - 260) et pour différents temps de chauffe (5 - 7 - 9 - 11 - 13 secondes).

Les résultats sont les suivants, en tenue mécanique des éprouvettes thermosoudées par rapport à la tenue mécanique des éprouvettes non thermosoudées, (en %) :

| Matériau | Résultat |
|---|---|
| 1 (comparatif) | 3/4 des pièces au dessus de 95% |
| 1 (comparatif) | 0% des pièces au-dessous de 75% |
| 2 (selon l'invention) | 3/4 des pièces au dessus de 96% |
| 2 (selon l'invention) | 0% des pièces au-dessous de 75% |

Finalement les tests mécaniques ont permis de montrer le bon comportement du matériau 2 selon l'invention par rapport à un polypropylène classique (matériau 1), en particulier en ce qui concerne la traction à - 30 °C, le fluage et la thermosoudure.

### EXEMPLE 2

Les deux matériaux précédents ont été testés en perméabilité liquide, c'est-à-dire que l'on mesure l'isolement électrique d'un bac rempli d'électrolyte (solution aqueuse de potasse KOH à environ 8N) baignant dans un mélange équivolumique d'eau et d'éthylène-glycol, mélange habituellement utilisé comme liquide de refroidissement. Le test est effectué par un diélectrimètre dont l'une des électrodes plonge dans l'électrolyte tandis que l'autre électrode est placée dans le liquide de refroidissement. La température d'essai est de 70°C.

Les résistances des matériaux 1 et 2 sont données ci-après en M.Ω:

| Durée (heure) | Matériau 1 (comparatif) | Matériau 2 (selon l'invention) |
|---|---|---|
| 0 | > 20.000 | > 20.000 |
| 16 | > 20.000 | > 20.000 |
| 51 | > 20.000 | > 20.000 |
| 147 | > 20.000 | > 20.000 |
| 399 | > 20.000 | > 20.000 |
| 2000 | > 20.000 | > 20.000 |

Ainsi la perméabilité liquide du matériau 2, selon l'invention, est identique à celle du matériau 1.

### EXEMPLE 3

Les deux matériaux précédents ont été testés en perméabilité à l'hydrogène.
Température de l'essai : 20 ± 2 °C
Durée de l'essai : 14 h.
Matériel testé : bacs plastiques constitués de 2 fonds de bacs (59 mm x 84 mm x hauteur variable (pour faire varier la surface des bacs)) thermosoudés entre eux (épaisseur des parois : 2,3 ± 0,2 mm).
Fuite calibrée d'hydrogène de 1,7 10⁻⁴ mbar.l/s

La courbe obtenue, donnant la perméabilité à l'hydrogène des bacs plastiques sous 1 bar, avec 1 bar = 10⁵ Pa, est donnée sur la figure 2. En ordonnée est représenté le flux F (m bar.l/s), et en abscisse est donnée la surface S du bac (en cm²). Les résultats pour les matériaux 1 et 2 sont respectivement donnés par les références 20 et 30.

Finalement, la perméabilité du matériau 1 est de 187 cm³/(cm².24h) à 25°C pour un film de 2,3 ± 0,2 mm pour une pression relative de 1 bar à 75% de HR. Si l'on prend l'hypothèse que la fuite varie proportionnellement avec l'épaisseur de la paroi, la perméabilité du matériau 1 serait donc de 4490 cm³/(cm².24h) à 25°C pour un film de 100 µm pour une pression relative de 1 bar à 75% de HR.

Enfin, la perméabilité du matériau 2 selon l'invention est de 170 cm³/(cm².24h) à 25°C pour un film de 2,3 ± 0,2 mm pour une pression relative de 1 bar à 75% de HR. Si l'on prend l'hypothèse que la fuite varie proportionnellement avec l'épaisseur de la paroi la perméabilité du matériau 2 selon l'invention serait donc de 4080 cm³/(cm².24h) à 25°C pour un film de 100 µm pour une pression relative de 1 bar à 75% de HR.

Ainsi le matériau 2 selon l'invention présente une perméabilité à l'hydrogène sensiblement améliorée par rapport à un polypropylène classique tel que le matériau 1.

En conclusion, il a été montré que le matériau 2 selon l'invention présente par rapport au matériau 1 comparatif (polypropylène classique) un comportement amélioré en terme de perméabilité à l'hydrogène, un comportement identique en terme de perméabilité aux liquides, et un comportement bien meilleur en terme de comportement mécanique (défini précédemment par des paramètres donnés).

## Revendications

1. Générateur électrochimique comportant au moins un conteneur monobloc étanche en un matériau polymère, ledit conteneur comprenant de 1 à 50 alvéoles, chaque alvéole comprenant un faisceau électrochimique, ledit matériau comportant au moins 95% poids de polypropylène, le complément à 100% poids étant constitué de copolymère propylène - éthylène, ledit matériau étant caractérisé en ce que le degré de cristallinité (mesuré par diffraction X) dudit polypropylène est compris entre 55% et 65%.

2. Générateur selon la revendication 1 tel que ledit matériau comporte au moins 97% de polypropylène.

3. Générateur selon l'une des revendications 1 ou 2 tel que le conteneur comprend de 5 à 20 alvéoles.

4. Générateur selon l'une des revendications 1 à 3 comportant un dispositif de refroidissement par circulation d'un liquide caloporteur le long des parois du conteneur.

5. Générateur selon l'une des revendications 1 à 4 à électrolyte alcalin et contenant des faisceaux nickel-hydrure métallique.

6. Générateur selon l'une des revendications 1 à 4 à électrolyte alcalin et contenant des faisceaux nickel-cadmium.

7. Générateur selon l'une des revendications 1 à 4 à électrolyte liquide organique et contenant des faisceaux au lithium.

8. Générateur selon l'une des revendications 1 à 7 tel que ledit matériau possède les caractéristiques suivantes :
* un module de flexion à 23 °C supérieur à 1650 MPa (ISO 178)
* un choc à 20 ± 2 °C, mesurant la tenue au point d'injection sur un fond de bac de dimension 60 x 85 mm², supérieur à 5 J
* une contrainte maximale de traction à -30 °C, mesurée sur des éprouvettes de dimensions données dans la norme ISO 527-2 sauf pour l'épaisseur qui est de 2,3 ± 0,2 mm, à une vitesse de 1 mm/mn, supérieure à 35 MPa, et,
* une élongation en fluage (en %), mesurée sous une charge de 5 MPa, à 55°C et pendant 10⁵ s, et sur des éprouvettes de dimensions données dans la norme ISO 527-2 sauf pour l'épaisseur qui est de 2,3 ± 0,2 mm, inférieure ou égale à 2%.

9. Générateur selon la revendication 8 tel que ledit matériau possède en outre la caractéristique suivante : un test de thermosoudure, mesuré à 23 °C avec une vitesse de traction de 10 mm/mn et sur des éprouvettes, thermosoudées ou non thermosoudées, constituées de 2 plaques carrées de 48 mm de côté et d'épaisseur 2,3 ± 0,2 mm, ladite thermosoudure étant étanche, tel que au moins 3/4 des pièces thermosoudées ont une tenue en traction au-dessus de 90% par rapport à la tenue en traction des pièces non thermosoudées et 0% des pièces thermosoudées ont une tenue en traction au-dessous de 75% par rapport à la tenue en traction des pièces non thermosoudées.
